# EUROPEAN PATENT APPLICATION

(11) **EP 2 905 557 A1**
(43) Date of publication of application: **12.08.2015**
(21) Application number: 15382002.2
(22) Date of filing: 12.01.2015
(51) Int. Cl.: F24J 2/20, F24J 2/50, F24J 2/46

(54) **VACCUM FLAT SOLAR COLLECTOR**

(30) Priority: 14.01.2014 ES 201430041 U; 20.06.2014 ES 201400547 U
(71) Applicant: Sanchez Lobera, Javier, 50730 El Burgo de Ebro (Zaragoza) (ES)
(72) Inventor: Sanchez Lobera, Javier, 50730 El Burgo de Ebro (Zaragoza) (ES)
(74) Representative: Capitán García, Maria Nuria

(57) **Abstract**

A vacuum flat solar collector comprising:
-an outer panel made of transparent polycarbonate which lets the solar radiation through, and which has a partial vacuum;
-a central panel made of transparent cellular thermoplastic material which is full of water and houses inside a solar radiation absorbing material;
-an insulating rear panel;
-an aluminium sheet interposed between the central panel and the rear panel;
-a frame for bracing the panels and sheets of the solar collector by pressure.

The nature and arrangement of the elements employed lead to a solar collector which has a low cost, is easy to manufacture and noticeably improves conductivity.

## Description

### TECHNICAL FIELD OF THE INVENTION

As can be inferred from the title of the invention, the object of the invention is a vacuum flat solar collector that allows the energy of solar radiation to be used, transforming it in low-temperature thermal energy for home or commercial uses.

The present invention is characterised by the nature and arrangement of the elements employed in the flat solar collector which is the object of the invention such that a solar collector which has a low cost, is easy to manufacture and noticeably improves conductivity is achieved.

Therefore, the present invention is limited to the field of the means for collecting thermal solar radiation.

### BACKGROUND OF THE INVENTION

Different solar collection systems are known in the state of the art, such as for example:
Protected flat collectors which have the outer side made of glass (usually tempered), whereas the remaining five sides are opaque and thermally insulated. A metal plate is located inside the box, exposed to the sun. This plate is joined or welded to a series of conduits through which a heat carrier (generally, water, glycol, or a mixture of both). Said plate is applied a selective treatment to increase its heat absorption, or is just painted black.

A second solar collection system consists of unprotected flat collectors, which are an economical variant of the previous systems, wherein the protective glass is done away with, leaving the plate directly exposed to the outside atmosphere. They also lack perimeter insulation. Due to its limited efficiency, it needs a larger surface to achieve the desired performance, but this is offset by its low cost.

Another solar collection system consists of vacuum tubes, which revolves around a different concept: the collecting surface is reduced in exchange for lower heat losses. The collecting sheet is placed inside vacuum tubes. Therefore, heat losses are negligible. These tubes have the same aspect than a traditional fluorescent tube but of a dark colour. The panels are made with several of these tubes mounted on a comb structure. The advantages of this system are its greater insulation (which makes particularly indicated for very cold or mountain climates) and its greater placement flexibility, since it usually permits a 20° variation with regard to its ideal inclination without a loss of output.

All the systems described above, the last one in particular, require heat to be transferred from the tubes to the water that flows inside them, in addition to being expensive as regards both their manufacture and the choice of materials.

Other solar collection systems comprise a plastic panel through which water flows. Solar radiation is directly collected by the walls of the collector, which are black either because the plastic is black or one of the outer surfaces of the collectors has been treated to make it black (by painting it). These systems do not create a vacuum in the first panel. In addition, radiation is absorbed by a selective treatment after going through the polycarbonate wall and, afterwards, it has to heat the water inside the panel by conduction, the heat going through the polycarbonate wall. Even though the collection of heat from the solar radiation by the absorbing element can be considered to be effective, the same cannot be said of the transfer of heat.

Thus, the object of the present invention is to develop a vacuum flat solar collector that improves on what is known in the state of the art up until now, particularly in regard to its manufacturing costs, as well as to improve the conductivity of the collected heat, developing a collector as the one described below and whose essence is captured in the first claim.

### DESCRIPTION OF THE INVENTION

The present invention is established and characterised in the independent claims, whereas the dependent claims describe other characteristics thereof.

The object of the present invention is a vacuum flat solar collector which makes use of the characteristics of panels of cellular material which let the solar radiation through.

The flat solar collector comprises an outer panel of transparent polycarbonate which lets the solar radiation through, which is a panel which has been subjected to partial vacuum such that the heat losses of the next panel can be minimised, which is an intermediate or central panel of transparent plastic, preferably thermoplastic, materials, and more accurately, in one option, it is cellular polycarbonate having longitudinal alveoli, full of water, which house inside a heat absorbing material, preferably black plastic strips which directly transfer by contact the heat of the solar radiation to the water, and a rear panel of five-chamber cellular polycarbonate, whereas in another option it is cellular polypropylene having longitudinal alveoli full of dyed-black water, such that it can absorb solar energy, which transforms into heat inside this dyed water, and a rear panel of textile Geopanel or rock wool having a plastic sheet to insulate from the outside, an aluminium sheet being interposed between the central and the rear panel in order to reflect the solar radiations which might have gone through the central panel and be useful to heat the water inside the central panel.

The central panel has means to allow the expansion stresses to be absorbed, which in a possible embodiment comprise cuts made in a regular manner in the cellular material panel, the alveoli affected by the cut being sealed in order to prevent a loss of water.

### BRIEF DESCRIPTION OF THE FIGURES

The present specification is complemented with a set of figures, illustrative of the preferred example of, and never limiting, the invention.
Figures 1 and 5 show a transverse section of the vacuum flat solar collector for two embodiments of the central panel.
Figures 2 and 6 show a plan view of the central panel of the collector for each embodiment of the central panel.
Figures 3 and 7 show a transverse section of each embodiment of the central panel.
Figures 4 and 8 show a perspective view of the embodiments of the central panel, where the alveoli of the polycarbonate panel and the location of the black plastic strips housed inside them can be seen in Figure 4, and the alveoli of the polypropylene panel and the location of the solar radiation collecting water housed inside them can be seen in Figure 8.

### DETAILED DESCRIPTION OF THE PREFERRED EMBODIMENT OF THE INVENTION

In the light of the figures, a preferred embodiment of the proposed invention is described next.

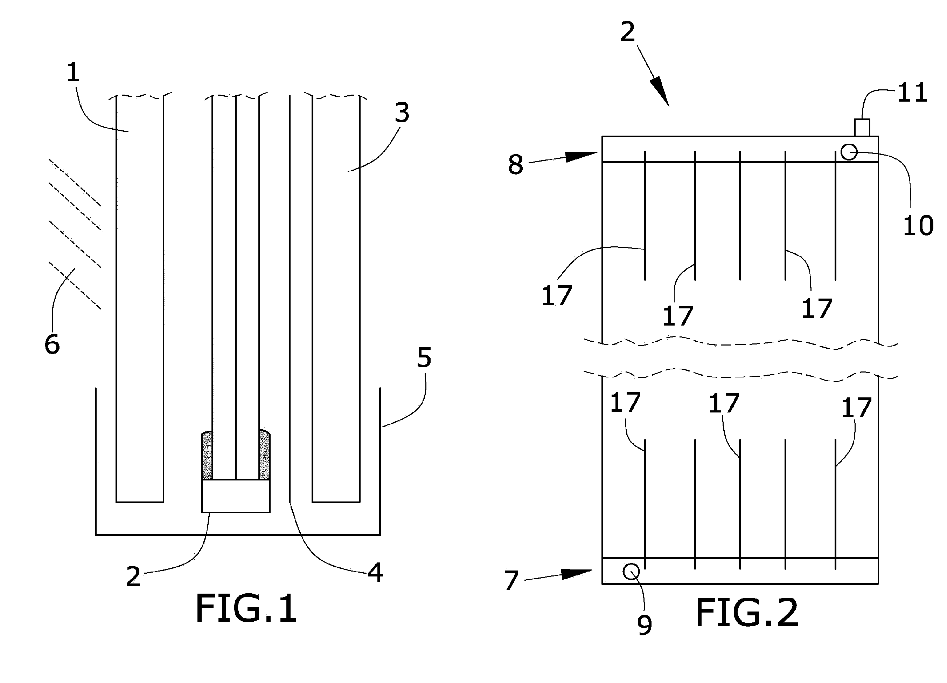

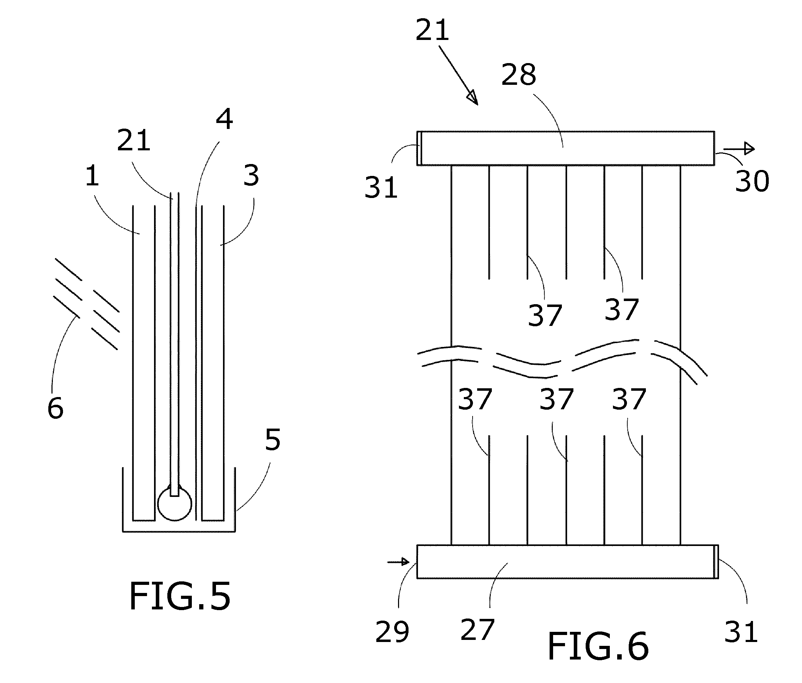

Figures 1 and 5 show a view of a section of the vacuum flat solar collector comprising:
- An outer panel (1) made of transparent polycarbonate which lets the solar radiation (6) through, which might have inside moisture absorbing means such as silica gel balls and which has a partial vacuum.
- A central panel (2, 21) made of transparent plastic, preferably thermoplastic, materials, full of water, and which houses inside a solar radiation absorbing material.
- An insulating rear panel (3), which in a possible embodiment comprises a 3mm expanded polypropylene layer plus a cellular polypropylene sheet having five air chambers, and in another embodiment is a rock wool or textile Geopanel panel plus a plastic sheet insulating it from the outside.

- An aluminium sheet (4) interposed between the central panel (2, 21) and the rear panel (3).
- A frame (5) for bracing the panels and sheets of the solar collector by pressure.

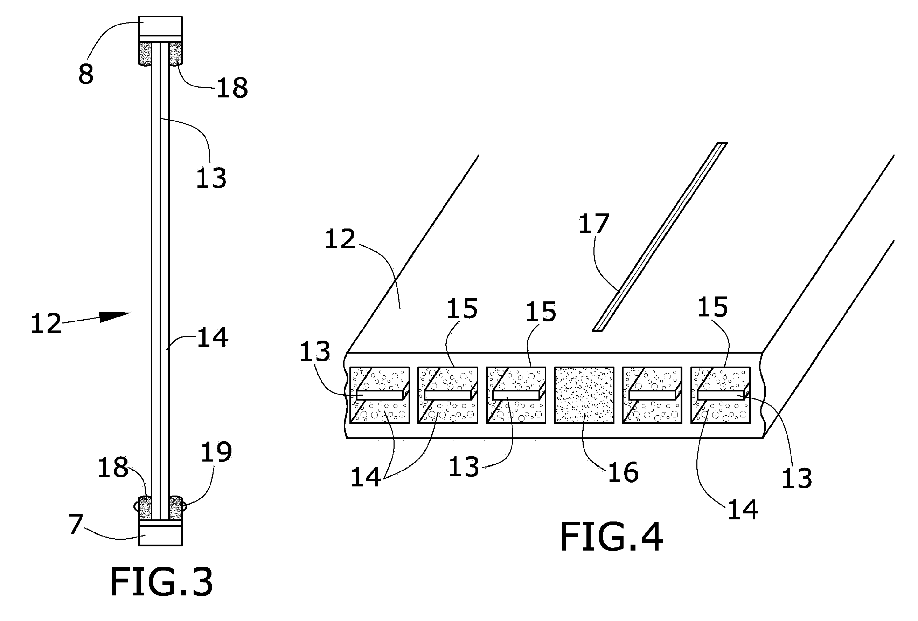

In the option of Figures 1 to 4, the central panel (2) comprises:
- A cellular polycarbonate panel (12) having a series of longitudinal alveoli (15).
- A series of solar radiation absorbing materials housed inside the longitudinal alveoli (15), which in a possible embodiment are black plastic strips (13) which are surrounded by water (14).
- A bottom U-shaped fastener (7) sealed with silicone (18) which has a water inlet (9).
- A top U-shaped fastener (8) sealed with silicone (18) which has a water outlet (10) and an air outlet (11).

The plastic strips (13) or the solar radiation absorbing material will preferably be horizontally arranged inside the alveoli (15) in order to provide a greater solar radiation collecting surface.

In order to provide a sufficient attachment of the locking profiles (7) and (8) onto the edges of the polycarbonate panel (12), there are screws or rivets (19) distributed in a regular manner.

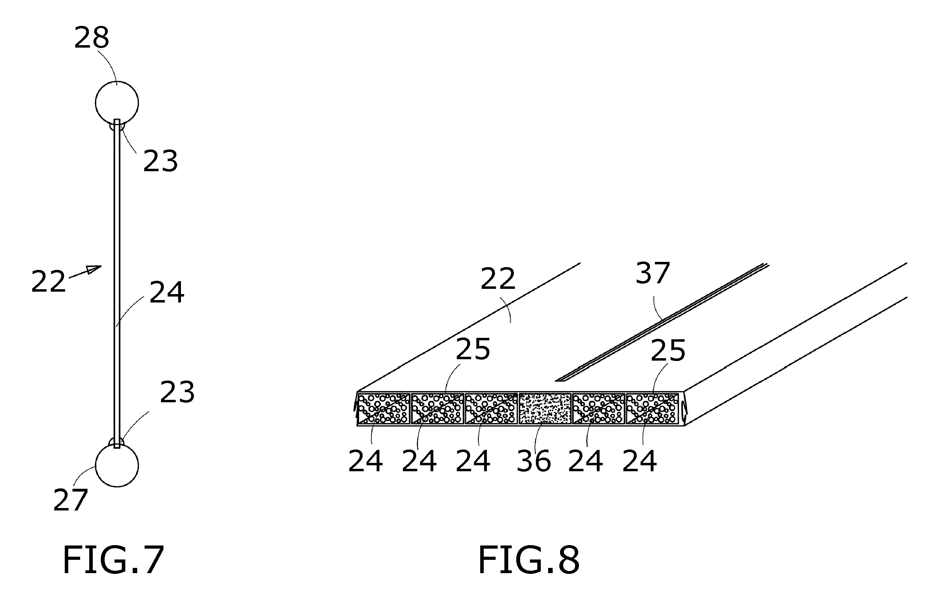

In the option of Figures 5 to 8, the central panel (21) comprises:
- A cellular polypropylene panel (22) having a series of longitudinal alveoli (25).
- A solar radiation absorbing material housed inside the longitudinal alveoli (25), which is dyed-black water (24).
- A bottom fastener (27), which is a tube having a slot in which the panel is inserted and which is sealed by welding (23) and which has a water inlet (29) and a stopper (31).
- A top fastener (28), which is a tube having a slot in which the panel is inserted and which is sealed by welding (23) and which has a water outlet (29) and a stopper (31).

Given that the central panel (2, 21) naturally suffers expansion stresses, it is advisable to make a series of regularly distributed cuts (17, 37). These cuts are made on part of the length of the alveoli (15, 25), near their ends. As a result of the loss of water that would occur because of said cuts, these alveoli on which a cut has been made will be closed by means of a seal (16, 36) made on their end, water not being permitted to flow inside them.

Another possible way to avoid making cuts (17, 37) to prevent the stresses generated by the expansion of the central panel (2, 21) would be to make it narrower and then join the necessary number of panels to achieve the required width by arranging several panels in parallel.

The flow of water inside the alveoli (15, 25) of the central panel (2, 21) can be achieved by means of either the thermosyphon effect or a water circulation pump actuated according to the temperature of sensors placed in the collector and in the storage tank.

## Claims

1. A vacuum flat solar collector, **characterised in that** it comprises:
- an outer panel (1) made of transparent polycarbonate which lets the solar radiation (6) through, and which has a partial vacuum;
- a central panel (2, 21) made of transparent cellular thermoplastic material which is full of water and houses inside a solar radiation absorbing material;
- an insulating rear panel (3);
- an aluminium sheet (4) interposed between the central panel (2, 21) and the rear panel (3);
- a frame (5) for bracing the panels and sheets of the solar collector by pressure.

2. A vacuum flat solar collector according to claim 1, **characterised in that** the central panel (2) is made with a cellular polycarbonate panel (12) which has a series of longitudinal alveoli (15), wherein the solar radiation absorbing material is black plastic strips (13) which are housed inside the alveoli (15) and are surrounded by water (14).

3. A vacuum flat solar collector according to claim 2, **characterised in that** it has a U-shaped bottom fastener (7) sealed with silicone (18) which has a water inlet (9); and a U-shaped top fastener (8) sealed with silicone (18) which has a water outlet (10) and an air outlet (11).

4. A vacuum flat solar collector according to claim 3, **characterised in that** regularly distributed screws or rivets (19) are regularly arranged on the locking profiles (7) and (8) on the edges of the polycarbonate panel (12).

5. A vacuum flat solar collector according to claim 1, **characterised in that** the central panel (21) is made with a cellular polypropylene panel (22) which has a series of longitudinal alveoli (25), wherein the solar radiation absorbing material is dyed-black water (24) which flows through the alveoli (25).

6. A vacuum flat solar collector according to claim 5, **characterised in that** the central panel (21) has a bottom fastener (27) in the shape of a tube sealed by welding (23) to the panel (22) and which has a water inlet (29) and a stopper (31); and a top fastener (28) in the shape of a tube sealed by welding (23) to the panel (22) and having a water outlet (30) and an air outlet (31).

7. A vacuum flat solar collector according to any of claims 2 or 5, **characterised in that** the central panel (2, 21) has a series of cuts (17, 37), which are distributed in a regular manner, made on part of the length of the alveoli (15, 25) and near their ends, the cuts (17, 37) of these alveoli being closed by means of a seal (16, 36) placed on their ends which does not allow water to flow inside them.

8. A vacuum flat solar collector according to claim 1, **characterised in that** the outer panel (1) has inside moisture absorbing means such as silica gel balls.

9. A vacuum flat solar collector according to claim 1, **characterised in that** the rear panel (3) is a cellular polycarbonate panel comprising a 3mm expanded polypropylene layer plus a cellular polycarbonate sheet having five air chambers.

10. A vacuum flat solar collector according to claim 1, **characterised in that** the rear panel (3) is a rock wool or textile Geopanel panel plus a plastic sheet insulating it from the outside.
